Europäisches Patentamt

European Patent Office

Office européen des brevets

(11) Publication number: **0 060 842**
**B1**

(12) **EUROPEAN PATENT SPECIFICATION**

(45) Date of publication of patent specification: **08.04.87**

(51) Int. Cl.⁴: **F 16 K 1/06, F 16 K 31/05**

(21) Application number: **81901994.4**

(22) Date of filing: **29.06.81**

(86) International application number:
**PCT/US81/00891**

(87) International publication number:
**WO 82/01233 15.04.82 Gazette 82/10**

(54) **HYDRAULIC CHOKE DEVICE.**

(30) Priority: **26.09.80 US 160972**

(43) Date of publication of application:
**29.09.82 Bulletin 82/39**

(45) Publication of the grant of the patent:
**08.04.87 Bulletin 87/15**

(84) Designated Contracting States:
**FR**

(56) References cited:
**DE-B-2 310 200**
**FR-A-1 188 232**
**GB-A-1 288 028**
**US-A-2 061 852**
**US-A-2 301 355**
**US-A-2 324 571**
**US-A-2 327 980**
**US-A-2 598 187**
**US-A-2 614 795**
**US-A-2 843 152**
**US-A-3 466 945**
**US-A-4 047 695**

(73) Proprietor: **TEXAS CHOKES INTERNATIONAL INC.**
**P.O. Box 61131**
**Houston, TX 77208 (US)**

(72) Inventor: **RENFRO, Wesley E.**
**7219 LaGranada**
**Houston, TX 77083 (US)**

(74) Representative: **Simonnot, Bernard et al**
**Cabinet Simonnot 49, Rue de Provence**
**F-75442 Paris Cédex 09 (FR)**

Courier Press, Leamington Spa, England.

## Description

This invention relates in general to high pressure fluid choke devices and, more particularly, to choke devices designed for use on oil and gas wells.

Prior Art

One of the most potentially dangerous and expensive situations faced by the petrochemical industry has been the prevention of well blowouts. In order to prevent well blowouts, much research and development time and money has been expended to design high pressure fluid choke devices.

US—A—4 047 695 describes an adjustable choke for regulating flow in oil and gas wells, this choke comprising, in combination: a choke house assembly having a choke housing body provided with a passageway having an exit opening at one end and a plug entrance opening at its opposite end, the passageway being provided with a shoulder stud perpendicularly attached to the housing body and having a fluid entry passageway opening into the housing body passageway, the shoulder stud being attachable to the fluid well member for the fluid entry passageway to receive the well fluids, a wear sleeve assembly attached to the choke housing body passageway sidewall at the exit opening end and having an entry wear sleeve and a downstream wear sleeve, the entry wear sleeve having an outwardly flared opening section to receive the fluids and direct them through the downstream wear sleeve; an operator assembly having: an operator housing attachable to the choke housing body and having an operator rod channel alignable with the choke housing body passageway and extending through the operator housing, an operator rod positioned in the channel and threadingly attached at one end to a threaded flange, its opposite end extending toward the wear sleeve assembly, a plug attached to the operator rod's opposite end and extending toward the wear sleeve assembly, the plug shaped to sealingly seat in the plug seat when positioned therein.

The most popular devices of this type are those presently marketed by NL Industries, Inc. as described in their publication NLS 4881—580, Dresser Industries as described in their Bulletin No. E—53031—BC and Patterson Service, Inc. as described in their publication entitled "When You Are Caught Under Pressure . . . Patterson Adjustable Choke".

The aforesaid publication NLS 4881—580 shows a drilling choke system wherein a cavity is provided in the sidewall of the fluid passageway, directly opposite the shoulder stud of the choke housing.

US—A—2 598 187 teaches the use of ball nose plugs and suitably shaped seats therefor.

US—A—2 327 980 teaches a drive means attached to gearing for moving the closure member of a valve into and out of its operating position by means of a motor that can be controlled from a remote station.

However, these and similar prior art choke devices have experienced rapid deterioration of wear sleeves and other internal parts, long downtime for repairs, difficulty in handling fluid surges through chokes, or require too great an amount of hydraulic pressure to operate the choke. Furthermore, the prior art devices are not equipped with backup systems in case the hydraulic system goes down because of cut cables or power outages.

Accordingly, the present invention solves these problems by providing a hydraulic choking device to be installed on a high pressure fluid well member to control flow of fluids from the well comprising in combination, (a) a choke housing assembly having a choke housing body provided with a passageway with an exit opening at one end and a ball nose plug entrance opening at its opposite end wherein the passageway is provided with a cavity in its sidewall perpendicular to the passageway, a shoulder stud perpendicularly attached to the housing body and having a fluid entry passageway opening into the housing body passageway directly opposite the cavity wherein the shoulder stud is attachable to the fluid well member for the fluid entry passageway to receive the well fluids, and a wear sleeve assembly attached to the choke housing body passageway sidewall at the exit opening end and having an entry wear sleeve and a downstream wear sleeve wherein the entry wear sleeve has an outwardly flared opening to receive fluids and to direct then through the downstream wear sleeve which is also provided with a flared opening to receive the fluids and direct them through an opening of the ball nose plug seat; (b) an operator assembly comprising an operator housing attachable to the choke housing body and having an operator rod channel aligned with the choke housing body passageway and extending through the operator housing, an operator rod positioned in the channel and threadingly attached at one end to a threaded flange wherein its opposite end is extended toward the wear sleeve assembly, and a ball nose plug attached to the operator rod's opposite end and extending toward the wear sleeve assembly, wherein the plug has a ball nosed shape to sealingly seat in the ball nose plug seat when positioned therein; and (c) a drive assembly having a drive means drivingly attached to the threaded shaft to rotate the shaft and cause the ball nose plug to advance or retract from the choke housing body passageway.

Brief Description of the Drawings

Figure 1 is a partial cross-section three dimensional view of a preferred embodiment of the invention.

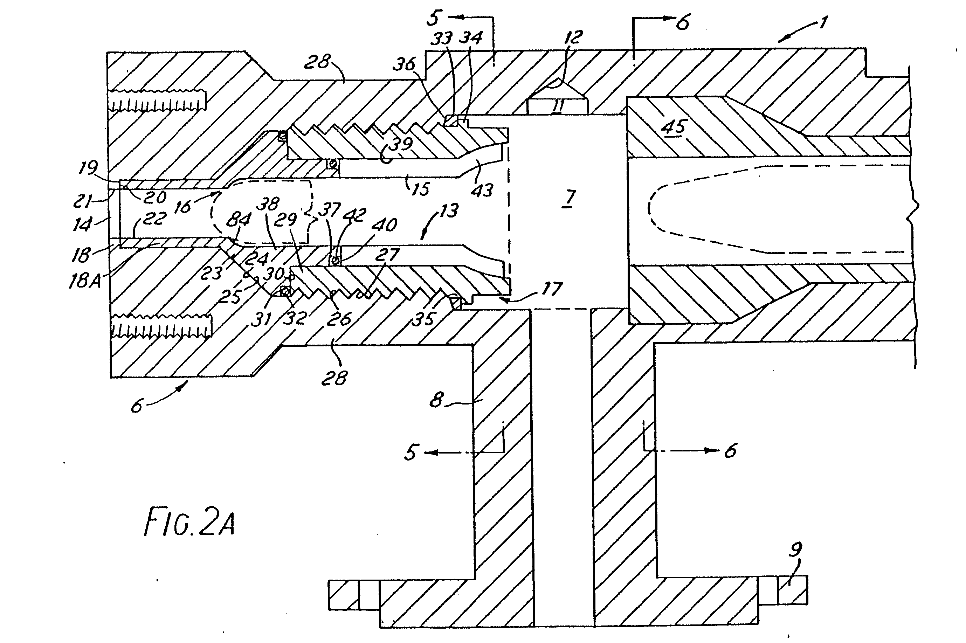

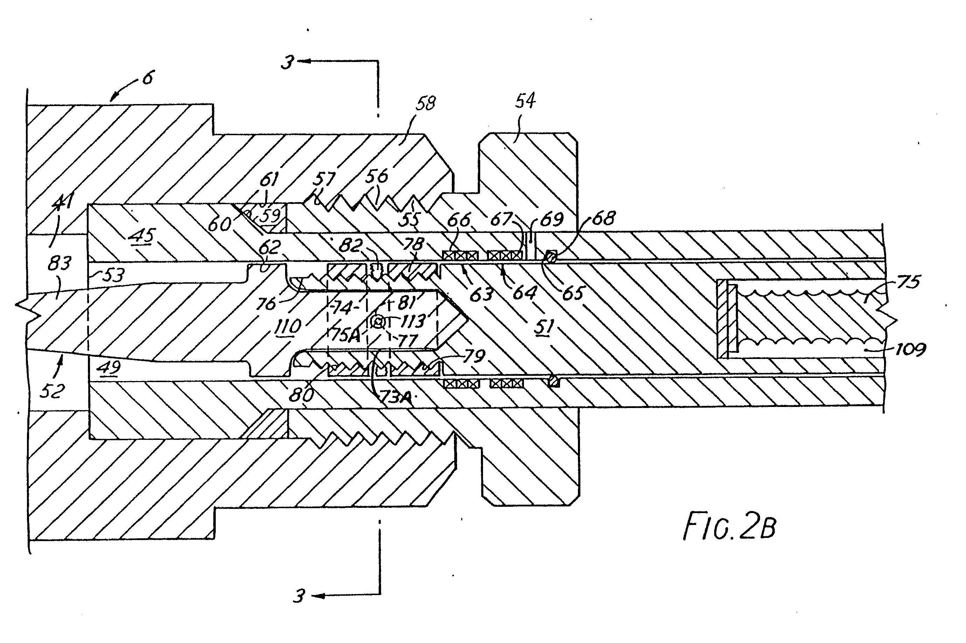

Figures 2A, 2B and 2C are partial cross-sectional views that together form a full cross-sectional view of the choke housing body with wear sleeve assembly and operator housing in place.

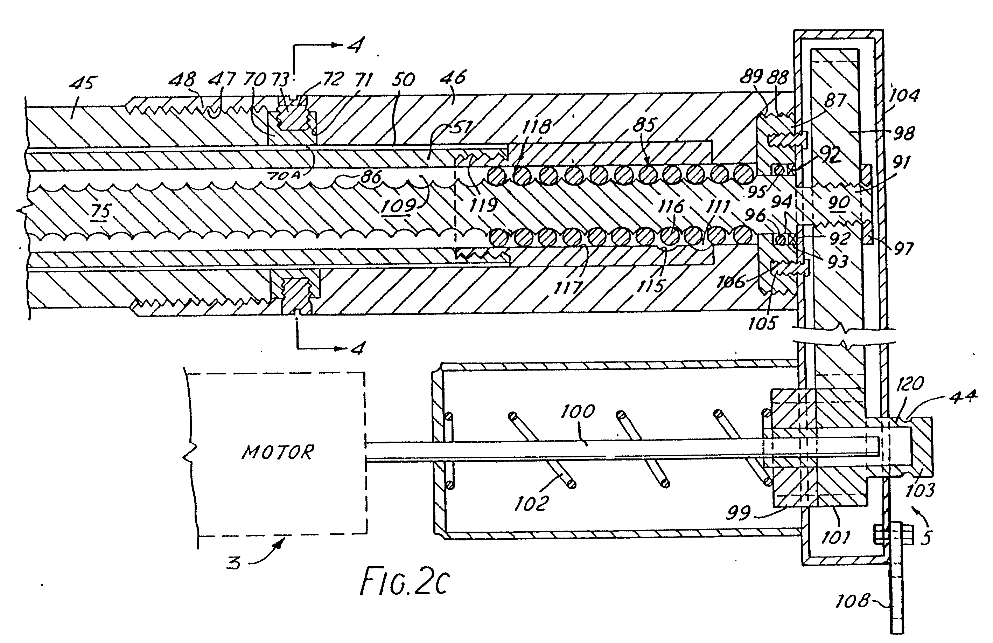

Figure 3 is an end view of the ram nut taken along lines 3—3 of Figures 1 and 2B.

Figure 4 is an end view of the stabilizer ring taken along lines 4—4 of Figures 1 and 2C.

Figure 5 is an end view of the wear sleeve housing taken along lines 5—5 of Figures 1 and 2A.

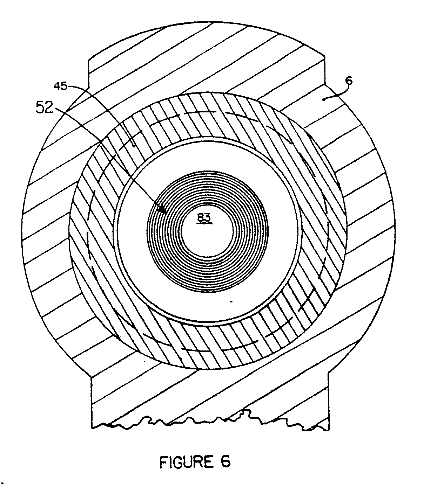

Figure 6 is an end view of the operator rod taken along lines 6—6 of Figures 1 and 2A.

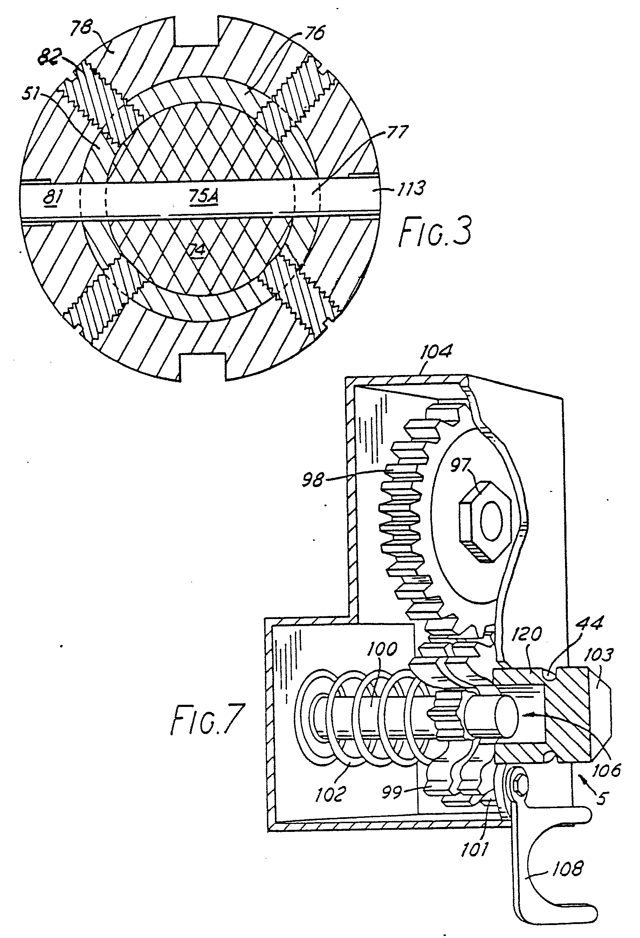

Figure 7 is a partial cross-sectional view of the gear assembly and manual override gear assembly.

Preferred Embodiments of the Invention

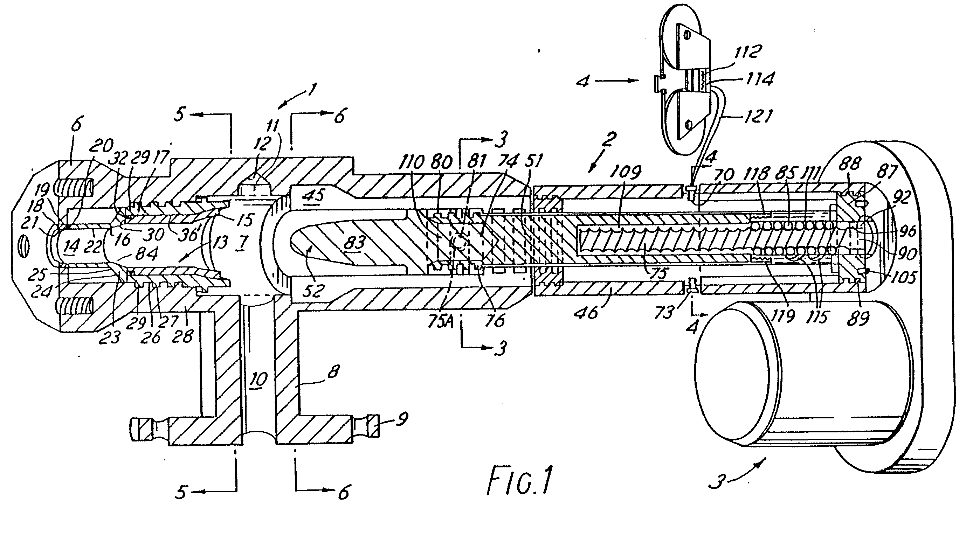

Turning to Figure 1, a preferred embodiment of the hydraulic choking device, according to this invention, is illustrated comprising, in general, a choke housing assembly, denoted generally by the numeral 1, an operator assembly, denoted generally by the numeral 2, and a drive assembly, denoted generally by the numeral 3, and in a more preferred general embodiment, the hydraulic choking device will also comprise a fluid displacement position indicator, denoted generally by the numeral 4, and a manual override assembly, denoted generally by the numeral 5.

The choke housing assembly 1 is provided with a choke housing body 6 having passageway 7 extending parallel to the axis of choke housing body 6. Choke housing body 6 is also provided with a shoulder stud 8 perpendicularly attached, such as by welding, to the choke housing body 6. Shoulder stud 8 has a flange 9 attached to its lower end, which flange 9 normally connects to the well manifold (not shown) and is provided with a fluid entry passageway 10 opening perpendicularly into the housing body passageway 7 and directly opposite passageway cavity 11 drilled out in pasageway sidewall 12. In a preferred embodiment, cavity 11 will be conically shaped, as shown, in order to direct the fluid flow through passageway 10 into wear sleeve assembly, denoted generally by the numeral 13, in a manner designed to reduce wear of passageway wall 12.

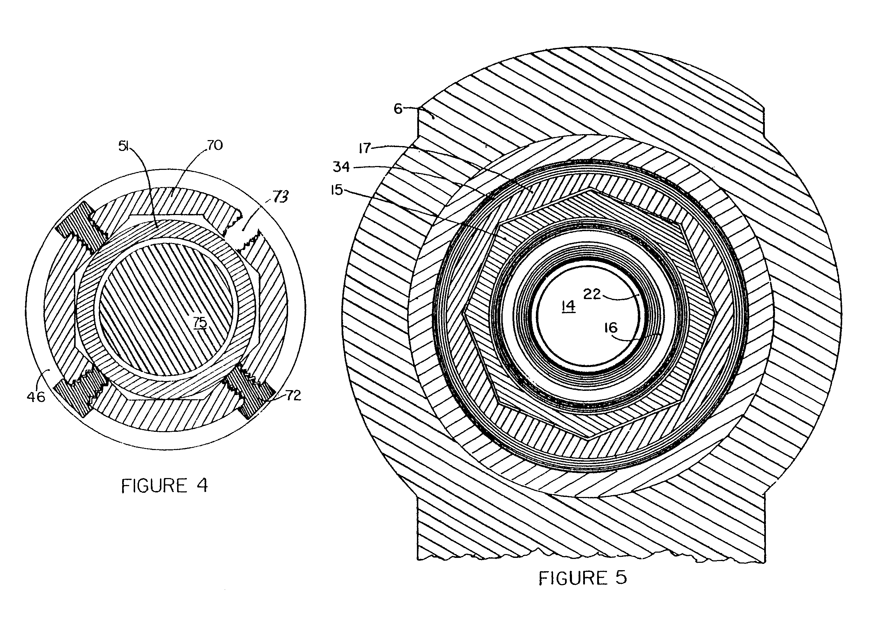

Wear sleeve assembly 13 is positioned at exit opening end 14 of choke housing body 6. Assembly 13 comprises an entry wear sleeve 15 and a downstream wear sleeve 16 held in position at exit opening 14 by wear sleeve housing 17 as described below. Choke housing body 6 is provided with a circular ridge 18 extending about and forming exit opening 14. Downstream wear sleeve 16 is formed having a circular hollow rod stem 18A having rear end surface 19 abutting flushly with ridge sidewall 20 to form a flush passageway channel formed by ridge surface 21 and downstream wear sleeve rod 22. Downstream wear sleeve 16 has an outwardly flared section 23, whose outer circular surface 24 fits flushly against choke housing body wall 25. Wear sleeve housing 17, having an octagonal inner diameter cross-section as is shown in Figure 5, is provided with exterior threads 26 which are matingly screwed into threads 27 of choke housing body wall 28 as shown in Figure 1. Wear sleeve housing stud 29 fits flushly against downstream wear sleeve surface 30 forcing wear sleeve 16 against choke housing body stud surface 20 as shown. In a preferred embodiment downstream wear sleeve 16 is flared at 23 and is provided with groove 31 to accommodate O-ring 32 to form a seal to prevent fluid from passing between surfaces 24 and 25. To further prevent fluid leakage, a teflon-coated steel ring 33 is positioned behind outwardly protruding wear sleeve housing stud 34 and in sealing contact with wear sleeve assembly exterior wall surface 35 and choke housing body surface 36. In a preferred embodiment, wear sleeve housing 17 is provided with an outwardly flared interior cross-section to receive entry wear sleeve 15 machined to sealingly fit interior channel wall 36′ of wear sleeve housing 17 as shown in Figure 1. In a preferred embodiment, an O-ring passageway 37 is formed by downstream wear sleeve circular stud member 38, wear sleeve housing stud walls 39, and entry wear sleeve stud walls 40 wherein O-ring 42 is housed. In a still more preferred embodiment, the downstream wear sleeve and the wear sleeve housing are constructed from a tungsten alloy to reduce the fluid wear which occurs during operation of the choke device. In another embodiment, entry wear sleeve 15 is also provided with a flared-in section 43 to receive the fluids flowing through passageways 10 and 7. By utilization of such flared-in section, back pressure caused by the fluid flow is substantially reduced thus allowing smaller hydraulic forces to operate the operator assembly 2 as described hereinbelow.

Operator assembly 42 comprises an operator nose assembly 45 and an operator body assembly 46 which are attached to one another by meeting operator nose assembly threads 47 and interior operator body assembly threads 48, as shown in the Figures. Both are provided with parallel aligned channels 49 and 50, respectively, which together make up the operator rod channel through which operator rod 51 and entry ball nose plug 52 can pass. Operator nose assembly 45 is attached to choke housing body 6 at ball nose plug entrance opening 53 by hammer nut 54 which is provided with threads 55 which are matingly threaded into threads 56 located on the interior surface 57 of ball nose plug entrance section 58 of choke housing body 6. In a preferred embodiment teflon coated steel ring 59 is machined to provide a sealing fit between operator nose assembly exterior surface 60 and ball nose plug entrance section surface 61, as shown in the Figures. To provide for internal sealing of channel 53, operator nose assembly interior wall 62 is provided with recesses 63, 64 and 65 into which packing glands 66 and 67 and O-ring 68 are positioned as shown. In a preferred embodiment and as a safety feature, operator nose assembly 45 is provided with bleed opening 69 to allow fluid which has leaked past packing glands 66 and 67 to escape. In another preferred embodiment, stabilizer ring 70 having opening 70A is abutted against shoulder plate surface 71 of operator body assembly 46 where it is fixedly attached by screws 72 that pass through openings 73 in operator body assembly 46 as shown. In a more preferred embodiment, one of openings 73 provides access to fluid displacement position indicator 4 as described hereinbelow.

Operator rod 51 is provided with end cavity 73A into which fits ball nose plug stud member 74, as is described in more detail hereinbelow. Operator rod 51 is also provided with a second channel 109 drilled from the opposite end of operator rod assembly 51 and having an internal diameter sufficiently large to allow passage of ball nut shaft 75.

Stud member 74 is provided with shear pin opening 75A fitting into cavity 73A formed by operator rod walls 76 and having operator rod shear pin opening 77 alignable with shear pin opening 75A when stud member 74 is placed in cavity 110 as shown. In a preferred embodiment ram nut 78 having threads 79 matingly screwable onto operator rod threads 80 and also provided with ram nut shear pin opening 81 with threaded screw 82 sealing shear pin 113 in position in opening 75A, 77 and 81 is provided to supply additional stability to ball nose plug 52's attachment to operator rod 51 as shown. Ram nut 78 is further securely fastened by screws 82 that are screwed down onto threads 80. Plug section 83 of ball nose plug 52 is shaped to sealingly mate with downstream wear sleeve inner surface seat 84. The utilization of the ball nose design reduces back pressure resulting from fluid flow striking ball nose plug 52 as ball nose plug 52 is moved toward downstream wear sleeve 16.

Ball bearing assembly 85 is held in position in operator rod channel 109 by flange 118 which is screwed to operator rod 51 by threaded end 119. Channel 109 has a recessed slot 111 to accommodate ball bearing return tubes 115. Ball bearings 116 are held securely in grooves formed by threads 86 of shaft 75 and bearing assembly wall 117. Operator end cap 87 has external threads 88 which are matingly threaded to threads 89 of operator body assembly 46 as shown. Operator end cap 87 is provided with a shaft channel 90 through which gear shaft 91 passes through packing glands 92 located in recesses formed by operator end cap surfaces 93 and 94, respectively. Ball bearings 95 are also provided in a recess form by operator end walls 96 to assist in the rotation of shaft 91. Attached to end 97 of shaft 91 is gear 98 which meshes with drive gear 99 of drive means 3.

In a preferred embodiment, manual override assembly 5 is attached to motor shaft 100 to disengage gear 99 and engage manual override assembly gear 101 by pushing gear 101 against gear 99 and then fitting fork member 108 into groove 44 found in shaft 120 then blocking shaft 100 in operative mating position with gear 98. In manual operational position, gear 99 is no longer in contact with gear 98 in that it has been pushed against spring 102. Attachable to manual override shaft nut 103 is a turning crank or cheater bar arm (not shown).

In another preferred embodiment, to protect from dirt and other environmental conditions, gear housing 104 is fitted about gears 98, 99 and 101 and is secured in position by bolts 105 which screw into threaded opening 106 of operator end cap as shown.

In a preferred embodiment, operator body channel 50 is filled with a hydraulic fluid which passes through one of openings 73 to a conventional cable cylinder fluid displacement position indicator 4.

In operation, drive means 3 turns gear 99 which, in turn, rotates gear 98 and shaft 91 and 75. The rotation of shaft 75 turns operator rod 51 about ball bearings 85 forcing operator rod and nose plug 52 into passageway 7 restricting the fluid flow therethrough. Continued turning will result in nose plug 52 being seated in downstream wear sleeve 16 in sealing fashion shutting off the flow of fluid through the passageways. By reversing the direction of drive means 3, nose plug 52 can be retracted from downstream wear sleeve 16, again allowing passage of fluids through passageway 7 and through opening 14 of operator body 6. As operator rod 51 is moved into and out of passageway 7, hydraulic fluid flows through one of openings 73 which is not sealed by one of screws 72 and into cable cylinder cavity 121 causing indicator piston 114 to move accordingly. Attached to indicator piston 114 is indicator means 112 which registers the position of nose plug 52 in passageway 7.

There are, of course, many obvious alternative embodiments not specifically disclosed but which fall within the definition of the invention as defined by the following claims.

**Claims**

1. A hydraulic choking device to be installed on a high pressure fluid well member to control flow of fluids from the wells which comprises, in combination:

(a) A choke housing assembly (1) having:

(i) A choke housing body (6) provided with a passageway (7) having an exit opening at one end (14) and a ball nose plug entrance opening (11) at its opposite end, the passageway (7) being provided with a cavity (11) in its sidewall (12) perpendicular to the passageway (7), and provided with a shoulder stud (8) perpendicularly attached to the housing body and having a fluid entry passageway opening (10) into the housing body passageway (7) directly opposite the cavity (11), the shoulder stud (8) being attachable to the fluid well member for the fluid entry passageway (10) to receive the well fluids,

(ii) A wear sleeve assembly (13) attached to the choke housing body passageway sidewall (28) at the exit opening end (14) and having an entry wear sleeve (15) and a downstream wear sleeve (16), the entry wear sleeve (15) having an outwardly flared opening section (43) to receive the fluids and direct them through the downstream wear sleeve (16) which is also provided with a flared opening section (23) to receive the fluids and direct them through an opening of a ball nose plug seat (84),

(b) An operator assembly (2) having:

(i) An operator housing (46) attachable to the choke housing body (6) and having an operator rod channel (49) alignable with the choke housing body passageway (7) and extending through the operator housing (46),

(ii) An operator rod (51) positioned in the channel (49) and threadingly attached at one end to a threaded flange (118), its opposite end (76) extending toward the wear sleeve assembly (13),

(iii) A ball nose plug (52) attached to the operator rod's opposite end (76) and extending toward the wear sleeve assembly (13), the plug (52) having a ball nose shaped to sealingly seat in the ball nose plug seat (84) when positioned therein,

(c) A drive assembly (3) having a drive means (100) drivingly attached to the threaded shaft (75) to rotate the shaft (75) and cause the nose plug (52) to advance or retract from the choke housing body passageway (7).

2. A hydraulic choke device according to Claim 1 wherein the cavity (11) is conically shaped with its sidewall (12) adjacent to the choke housing body passageway.

3. A hydraulic choking device according to Claim 1 wherein the operator nose assembly (45) comprises packing glands (66, 67) through which the operator rod (51) passes in a sealing manner.

4. A hydraulic choking device according to Claim 3 wherein the operator nose assembly (45) is provided with a weep hole (69) located behind the packing glands (66, 67) to allow removal of any fluid which seeps past the packing glands (66, 67).

5. A hydraulic choking device according to Claim 1 wherein an operator end cap (87) is threadingly attached to the rear of the operator body assembly (46).

6. A hydraulic choking device according to Claim 1 wherein the ball nose plug (52) comprises a rear shoulder member (74) having a shear pin opening (75A) and attached to the operator rod's opposite end by a shear pin (113) passed through the plug shear pin opening (75A) and an aligned operator shear pin opening (77).

7. A hydraulic choking device according to Claim 6 wherein the opposite end (76) of the operator rod (51) is provided with a cavity into which plug rear shoulder member (74) fits.

8. A hydraulic choking device according to Claim 7 wherein the operator rod opposite end cavity (110) has a depth greater than the plug rear shoulder member (74).

9. A hydraulic choking device according to Claim 6 wherein a ram nut (78) is threadingly attached to the opposite end (76) of the operator rod (51) and is provided with a shear pin opening (81) through which the shear pin (113) can pass.

10. A hydraulic choking device according to Claim 1 wherein a stabilizer ring (70) is threadingly attached to the operator body asembly (46) of operator rod channel (109) and provided with an opening (70A) through which the operator rod (51) can pass.

11. A hydraulic choking device according to Claim 1 wherein the operator body assembly (46) is provided with an opening (73) to which is attached a fluid displacement indicator (4).

12. A hydraulic choking device according to Claim 5 wherein the drive assembly (3) is drivingly connected by a gear assembly to a ball nut shaft (75) sealingly extending through an operator end cap (87) opening and into an operator rod channel (109).

13. A hydraulic choking device according to Claim 12 wherein a manual gear drive assembly (5) is operatively connectable to the gear assembly.

14. A hydraulic choking device according to Claim 13 wherein the drive means (3) is provided with a rotatable shaft (100) to which is attached a first gear (99) and positioned by a spring (102) mounted about the shaft (100) to be operatively engaged with a second gear (98) mounted to the ball nut shaft (75); a manual override gear (101) mounted on the shaft (100) adjacent to the first gear (99) and provided with means (103) to push the first gear (99) out of locking position and pushing the manual override gear (101) in operating position with the second gear (98), and a hand-operating turning device attached to the manual override gear (101) to rotate same.

**Patentansprüche**

1. Hydraulische Drosseleinrichtung zur Montage an einem Hochdruckfluid-Bohrungsabschnitt für die Regelung des Fluidstroms aus der Bohrung, in Kombination umfassend;

(a) eine Drosselgehäuseinheit (1) mit:

(i) einem Drosselgehäusekörper (6) mit einem Durchlaß (7), der am einen Ende (14) eine Austrittsöffnung und am entgegengesetzten Ende eine Eintrittsöffnung (11) für einen Kugelnasenstopfen aufweist, wobei der Durchlaß (7) in seiner Seitenwand (12) eine zum Durchlaß (7) senkrechte Aussparung (11) hat und einen geflanschten Ansatz (8) aufweist, der senkrecht zum Gehäusekörper an diesem befestigt ist und der Aussparung (11) direkt gegenüber eine Fluideinlaßkanalöffnung (10) in den Gehäusekörper-Durchlaß (7) hat, wobei der geflanschte Ansatz (8) an dem Fluidbohrungsabschnitt befestigbar ist, so daß der Fluideinlaßkanal (10) die Bohrungsfluide aufnehmen kann,

(ii) einer Verschleißhülseneinheit (13), die an der Seitenwand (28) des Drosselgehäusekörper-Durchlasses am austrittsseitigen Ende (14) befestigt ist und eine eintrittsseitige Verschleißhülse (15) sowie eine abstromseitige Verschleißhülse (16) umfaßt, wobei die eintrittsseitige Verschleißhülse (15) einen nach außen erweiterten Öffnungsabschnitt (43) hat, der die Fluide aufnimmt und sie durch die abstromseitige Verschleißhülse (16) leitet, die ebenfalls einen erweiterten Öffnungsabschnitt (23) aufweist zur Aufnahme der Fluide und zum Leiten derselben durch eine Öffnung eines Kugelnasenstopfen-Sitzes (84),

(b) eine Betätigungsvorrichtung (2) mit:

(i) einem Betätigungsgehäuse (46), das am Drosselgehäusekörper (6) befestigbar ist und einen Betätigungsstangenkanal (49) aufweist, der mit dem Drosselgehäusekörper-Durchlaß (7) ausrichtbar ist und durch das Betätigungsgehäuse (46) verläuft,

(ii) einer in dem Kanal (49) positionierten Betätigungsstange (51), die mit einem Ende mit einem Gewindeflansch (118) verschraubt ist, während ihr entgegengesetztes Ende (76) zur Verschleißhülseneinheit (13) verläuft,

(iii) einem Kugelnasenstopfen (52), der am entgegengesetzten Ende (76) der Betätigungsstange befestigt ist und zu der Verschleißhülseneinheit (13) verläuft, wobei der Stopfen (52) eine so geformte Kugelnase hat, daß sie nach Positionierung in dem Kugelnasenstopfen-Sitz (84) abdichtend in diesem sitzt,

(c) eine Antriebseinheit (3) mit einem Antriebsorgan (100), das an der Gewindespindel (75) antriebsmäßig befestigt ist und diese dreht und den Kugelnasenstopfen (52) in den Durchlaß (7) des Drosselgehäusekörpers vorschiebt bzw. daraus zurückzieht.

2. Hydraulische Drosseleinrichtung nach Anspruch 1, wobei die Ausnehmung (11) konische Form hat und ihre Seitenwand (12) an den Drosselgehäusekörper-Durchlaß angrenzt.

3. Hydraulische Drosseleinrichtung nach Anspruch 1, wobei die Betätigungsnaseneinheit (45) Stopfbüchsenpackungen (66, 67) aufweist, durch die die Betätigungsstange (51) dicht geführt ist.

4. Hydraulische Drosseleinrichtung nach Anspruch 3, wobei die Betätigungsnaseneinheit (42) eine hinter den Stopfbüchsenpackungen (66, 67) befindliche Ablauföffnung (69) aufweist zur Ableitung von an den Stopfbüchsenpackungen (66, 67) vorbei eindringendem Fluid.

5. Hydraulische Drosseleinrichtung nach Anspruch 1, wobei auf das Hinterende der Betätigungskörpervorrichtung (46) eine Endkappe (87) aufgeschraubt ist.

6. Hydraulische Drosseleinrichtung nach Anspruch 1, wobei der Kugelnasenstopfen (52) ein hinteres Schulterelement (74) umfaßt, das eine Scherstiftöffnung (75A) aufweist und an dem entgegengesetzten Ende der Betätigungsstange mittels eines Scherstifts (113), der durch die Scherstiftöffnung (75A) des Stopfens geführt ist, und einer damit fluchtenden Scherstiftöffnung (77) in der Betätigungsstange befestigt ist.

7. Hydrauliche Drosseleinrichtung nach Anspruch 6, wobei das entgegengesetzte Ende (76) der Betätigungsstange (51) eine Vertiefung aufweist, in die das hintere Schulterelement (74) des Stopfens paßt.

8. Hydraulische Drosseleinrichtung nach Anspruch 7, wobei die Vertiefung (110) im entgegengesetzten Ende der Betätigungsstange größere Tiefe als das hintere Schulterelement (74) des Stopfens hat.

9. Hydraulische Drosseleinrichtung nach Anspruch 6, wobei auf das entgegengesetzte Ende (76) der Betätigungsstange (51) eine Rammutter (78) aufgeschraubt ist und eine Scherstiftöffnung (81) aufweist, durch die der Scherstift (113) führbar ist.

10. Hydraulische Drosseleinrichtung nach Anspruch 1, wobei in die Betätigungskörpereinheit (46) des Betätigungsstangenkanals (109) ein Stabilisierungsring (70) eingeschraubt ist und eine Öffnung (70A) aufweist, durch die die Betätigungsstange (51) führbar ist.

11. Hydraulische Drosseleinrichtung nach Anspruch 1, wobei die Betätigungskörpereinheit (46) eine Öffnung (73) aufweist, an der ein Fluidverdrängungsanzeiger (4) befestigt ist.

12. Hydraulische Drosseleinrichtung nach Anspruch 5, wobei die Antriebseinheit (3) durch ein Getriebe antriebsmäßig mit einer Kugelmutterwelle (75) verbunden ist, die dicht durch eine Endkappe (87) und in einen Betätigungsstangenkanal (109) geführt ist.

13. Hydraulische Drosseleinrichtung nach Anspruch 12, wobei mit dem Getriebe eine manuelle Zahnantriebseinheit (5) betriebsmäßig verbindbar ist.

14. Hydraulische Drosseleinrichtung nach Anspruch 13, wobei die Antriebseinheit (3) aufweist eine Welle (100), auf der ein erstes Zahnrad (99) befestigt und durch eine auf der Welle (100) diese umgebend angeordnete Feder (102) so positioniert ist, daß es mit einem auf der Kugelmutterwelle (75) angeordneten zweiten Zahnrad in Arbeitseingriff bringbar ist, ein auf der Welle (100) angrenzend an das erste Zahnrad (99) angeordnetes manuelles Überholzahnrad (101) mit Mitteln (103), um das erste Zahnrad (99) aus der Eingriffslage und das manuelle Überholzahnrad (101) in Wirkstellung mit dem zweiten Zahnrad (98) zu schieben, und ein handbetätigtes Drehelement, das am manuellen Überholzahnrad (101) zum Drehen desselben befestigt ist.

**Revendications**

1. Dispositif hydraulique d'étranglement à duse destiné à être monté sur un organe d'un puits transmettant du fluide à haute pression afin que le débit de fluide sortant du puits soit réglé, comprenant en combinaison:

(a) un ensemble (1) à boîtier de duse ayant

(i) un corps (6) de boîtier de duse ayant un passage (7) qui a une ouverture de sortie à une première extrémité (14) et une ouverture (11) d'entrée de bouchon à nez de forme sphérique à son autre extrémité, le passage (7) ayant une cavité (11) formée dans sa paroi latérale (12) et perpendiculaire au passage (7), et ayant une dérivation (8) à épaulement fixée perpendiculairement au corps du boîtier et ayant une ouverture de passage d'entrée de fluide (10) débouchant dans le passage (7) du corps de boîtier juste en face de la face de la cavité (11), la dérivation à épaulement (8) étant destinée à être fixée à l'organe du puits de fluide afin que le passage d'entrée de fluide (10) reçoive les fluides du puits,

(ii) un ensemble (13) à manchon d'usure placé sur la paroi latérale (28) du passage du corps du boîtier de duse à l'extrémité de l'ouverture de sortie (14) et ayant un manchon d'usure d'entrée (15) et un manchon d'usure aval (16) le manchon d'usure d'entrée (15) ayant un tronçon (43) débouchant sous forme évasée vers l'extérieur afin qu'il reçoive les fluides et les dirige dans le manchon d'usure aval (16) qui a aussi tronçon d'ouverture évasée (23) destiné à recevoir les fluides et à les diriger par une ouverture d'un siège (84) de bouchon à nez de forme sphérique,

(b) un ensemble de manoeuvre (2) ayant

(i) un boîtier de manoeuvre (46) destiné à être fixé au corps (6) de boîtier de duse et ayant un canal (49) de tige de manoeuvre destiné à être aligné sur le passage (7) du corps de boîtier de duse et passant dans le boîtier de manoeuvre (46),

(ii) une tige manoeuvre (51) placée dans le canal (49) et fixée par vissage à une première extrémité d'un flasque fileté (118), son autre extrémité (76) étant tournée vers l'ensemble à manchon d'usure (13), et

(iii) un bouchon (52) à nez de forme sphérique fixé à l'extrémité opposée (76) de la tige de manoeuvre et tourné vers l'ensemble à manchon d'usure (13), le bouchon (52) ayant un nez de forme sphérique destiné à se loger de manière étanche dans le siège (84) de bouchon lorsqu'il y est placé, et

(c) un ensemble moteur (3) ayant un dispositif d'entraînement (100) relié à l'arbre fileté (75) afin qu'il l'entraîne et fasse tourner l'arbre (75) et provoque ainsi l'avance ou le recul du bouchon à nez de forme sphérique (52) par rapport au passage du corps de boîtier de duse.

2. Dispositif hydraulique d'étranglement selon la revendication 1, dans lequel ladite cavité (11) a une forme conique, sa paroi latérale (12) étant adjacente au passage du corps de boîtier de duse.

3. Dispositif hydraulique d'étranglement selon la revendication 1, dans lequel l'ensemble à nez de manoeuvre (45) comporte des garnitures (68, 67) dans lesquelles passe la tige de manoeuvre (51) de manière étanche.

4. Dispositif hydraulique d'étranglement selon la revendication 3, dans lequel l'ensemble à nez de manoeuvre (45) a un trou de suintement (69) placé derrière les garnitures (66, 67) destiné à permettre l'extraction de fluide qui peut avoir fui au-delà des garnitures (66, 67).

5. Dispositif hydraulique d'étranglement selon la revendication 1, dans lequel un capuchon d'extrémité de manoeuvre (87) est fixé par vissage à l'arrière de l'ensemble à corps de manoeuvre (46).

6. Dispositif hydraulique d'étranglement selon la revendication 1, dans lequel le bouchon à nez de forme sphérique (52) comporte un organe formant un épaulement arrière (74) ayant une ouverture (75A) de passage d'une goupille de cisaillement et fixé à l'extrémité opposée de la tige de manoeuvre par une goupille de cisaillement (113) passant dans l'ouverture (75A) de goupille de cisaillement de bouchon et dans une ouverture alignée (77) de logement de goupille de cisaillement de tige de manoeuvre.

7. Dispositif hydraulique d'étranglement selon la revendication 6, dans lequel l'extrémité opposée (76) de la tige de manoeuvre (51) a une cavité dans laquelle s'ajuste l'organe (74) à épaulement arrière du bouchon.

8. Dispositif hydraulique d'étranglement selon la revendication 7, dans lequel la cavité (110) de l'extrémité opposée de la tige de manoeuvre a une profondeur supérieure à celle de l'organe à épaulement arrière (74) du bouchon.

9. Dispositif hydraulique d'étranglement selon la revendication 6, dans lequel un écrou de vérin 78 est fixé par vissage à l'extrémité opposée (76) de la tige de manoeuvre (51) et à une ouverture (81) de passage de la goupille de cisaillement (113).

10. Dispositif hydraulique d'étranglement selon la revendication 1, dans lequel une bague de stabilisation (70) est fixée par vissage dans l'ensemble à corps de manoeuvre (46) du canal (109) de la tige de manoeuvre et a une ouverture (70A) permettant le passage de la tige de manoeuvre (51).

11. Dispositif hydraulique d'étranglement selon la revendication 1, dans lequel l'ensemble (46) à corps de manoeuvre a une ouverture (73) à laquelle est fixée un indicateur (4) de déplacement de fluide.

12. Dispositif hydraulique d'étranglement selon la revendication 5, dans lequel l'ensemble moteur (3) est raccordé par un ensemble à engrenage à un arbre (75) à écrou à billes disposé de manière étanche dans un capuchon d'extrémité de manoeuvre (87) débouchant dans un canal de tige de manoeuvre (109).

13. Dispositif hydraulique d'étranglement selon la revendication 12, dans lequel un ensemble manuel (5) d'entraînement de pignon peut être raccordé à l'ensemble à engrenage.

14. Dispositif hydraulique d'étranglement selon la revendication 13, dans lequel le dispositif moteur (3) a un arbre rotatif (100) auquel est fixé un premier pignon (99) et qui est positionné par un ressort (102) monté autour de l'arbre (100) afin qu'il coopère avec un second pignon (98) monté sur l'arbre (75) à écrou à billes, un pignon manuel prioritaire (101) monté sur l'arbre (100) près du premier pignon (99) et ayant un dispositif (103) destiné à repousser le premier pignon (99) en dehors de la position de verrouillage et à pousser le pignon manuel prioritaire (101) en position de travail en coopération avec le second pignon (98), et un dispositif manuel de rotation fixé au pignon manuel prioritaire (101) afin que celui-ci soit entraîné en rotation.

FIG.1

FIG.2A

0 060 842

FIG.2B

0 060 842

FIG.2c

0 060 842

FIGURE 4

FIGURE 5

0 060 842

FIGURE 6

FIG.3

FIG.7